# EUROPÄISCHE PATENTANMELDUNG

(11) **EP 3 017 855 A1**
(43) Veröffentlichungstag der Anmeldung: **11.05.2016**
(21) Anmeldenummer: 15193518.6
(22) Anmeldetag: 06.11.2015
(51) Int. Cl.: B01D 46/00, B01D 46/12

(54) **FILTERVORRICHTUNG UND BETRIEBSVERFAHREN HIERZU**

(30) Priorität: 06.11.2014 DE 102014116218
(71) Anmelder: LK Metallwaren GmbH, 91126 Schwabach (DE)
(72) Erfinder: Haidacher, Matthias, 90596 Schwanstetten (DE)
(74) Vertreter: Lang, Christian

(57) **Zusammenfassung**

Die vorliegende Erfindung betrifft eine Filtervorrichtung, insbesondere Rauchgas - oder Staubfiltervorrichtung, mit einem Gehäuse (2), einem Einlass (3) für das zu filternde Medium, einem Auslass (4) für das gereinigte Medium und mindestens einem Filter (8), der in dem Gehäuse zur Abtrennung der aus dem Medium zu filternder Stoffe angeordnet ist, wobei die Filtervorrichtung weiterhin eine Hohlwelle (5) mit einem Hohlwelleninnenraum aufweist, wobei die Hohlwelle drehbar in dem Gehäuse aufgenommen ist und mit dem Auslass verbunden ist oder diesen bildet, wobei der Filter als Filterscheibe (8) ausgebildet ist, und wobei die Filterscheibe Filtermaterial und einen Hohlraum aufweist, der zumindest teilweise von dem Filtermaterial umgeben und mit dem Hohlwelleninnenraum verbunden ist, sodass das zu reinigende Medium über den Einlass in das Gehäuse, durch das Filtermaterial in den Hohlraum des Filters und vom Hohlraum des Filters zum Hohlwelleninnenraum und von da zum Auslass gelangen kann. Weiterhin betrifft die Erfindung ein Verfahren zum Betrieb einer derartigen Filtervorrichtung.

## Beschreibung

### HINTERGRUND DER ERFINDUNG

### GEBIET DER ERFINDUNG

Die vorliegende Erfindung betrifft eine Filtervorrichtung, insbesondere eine Rauchgas- oder Staubfiltervorrichtung, mit einem Gehäuse, einem Einlass für das zu filternde Medium, einem Auslass für das gereinigte Medium und mindestens einem Filter, der in dem Gehäuse zur Abtrennung der aus dem Medium zu filternden Stoffe angeordnet ist. Darüber hinaus betrifft die vorliegende Erfindung ein Verfahren zum Betrieb einer derartigen Filtervorrichtung und insbesondere zur Reinigung einer derartigen Filtervorrichtung.

### STAND DER TECHNIK

Filtervorrichtungen werden in vielen Bereichen der Technik benötigt, um Stoffe, die in einem Medium enthalten sind, aus diesem Medium entfernen zu können. Das Medium kann hierbei eine Flüssigkeit oder ein Gas sein. Insbesondere bei Feuerungsanlagen oder bei Schneid- oder Trennprozessen entstehen Stäube, die in entsprechenden Gasen, wie beispielsweise Verbrennungsgas, oder in der Luft enthalten sind und die vor Abgabe des mit dem Staub kontaminierten Gases oder der kontaminierten Luft an die Umgebung aus diesen wieder entfernt werden müssen.

Entsprechend sind Rauchgasfilter oder Staubfilter aus dem Stand der Technik bekannt. Üblicherweise werden bei derartigen Filtervorrichtungen sogenannte Filterpatronen eingesetzt, welche ein Filtermaterial, wie beispielsweise ein Filtergewebe oder einen porösen Filterstoff enthalten, sodass bei Durchleitung des zu filternden Mediums durch die Filterpatrone die auszufilternden Stoffe in dem Filtermaterial hängen bleiben und sich dort ansammeln. Üblicherweise werden derartige Filterpatronen, wenn sie mit dem zu filternden Stoff so stark beaufschlagt sind, dass das zu filternde Medium nicht mehr oder nur noch unter hohem Aufwand durch die Filterpatrone geleitet werden kann, ausgetauscht und entsorgt. Eine Reinigung der Filterpatronen ist üblicherweise nicht vorgesehen oder nur unter schwierigen Umständen durchführbar. Beispielsweise ist es zur Reinigung von Filtern auch üblich, die Filter zurück zu spülen, indem die Durchtrittsrichtung des Mediums umgekehrt wird, um so den Filter von dem herausgefilterten Stoff, dem sogenannten Filterkuchen, zu befreien. Nachteil bei diesem Verfahren ist jedoch, dass die Strömungsrichtung des zu filternden Mediums bzw. eines sauberen Mediums umgekehrt werden muss, sodass der Filterbetrieb unterbrochen werden muss.

### OFFENBARUNG DER ERFINDUNG

### AUFGABE DER ERFINDUNG

Es ist deshalb Aufgabe der vorliegenden Erfindung, eine Filtervorrichtung und ein Verfahren zum Betrieb einer derartigen Filtervorrichtung bereitzustellen, bei denen die Nachteile aus dem Stand der Technik verringert oder behoben sind. Insbesondere soll eine Filtervorrichtung und ein Verfahren zum Filtern bereitgestellt werden, die eine zuverlässige und dauerhafte Filterung eines Mediums mit guten Filterergebnissen ermöglichen, wobei eine Reinigung der Filtervorrichtung zur Aufrechterhaltung eines guten Filterergebnisses ohne Unterbrechung des Filtervorgangs möglich sein soll. Gleichwohl soll die Filtervorrichtung einfach aufgebaut und das Filtrierverfahren einfach durchführbar sein.

### TECHNISCHE LÖSUNG

Diese Aufgabe wird gelöst durch eine Filtervorrichtung mit den Merkmalen des Anspruchs 1 sowie ein Verfahren zum Betrieb einer Filtervorrichtung nach den Merkmalen des Anspruchs 9. Vorteilhafte Ausgestaltungen sind Gegenstand der abhängigen Ansprüche.

Die Erfindung schlägt eine Filtervorrichtung vor, bei der in einem Gehäuse mindestens ein Filter zur Abtrennung der aus dem Medium zu filternden Stoffe angeordnet ist, wobei ein Einlass für das zu filternde Medium und ein Auslass für das gereinigte Medium vorhanden sind, um das zu reinigende Medium im Gehäuse dem Filter zuzuführen. Erfindungsgemäß ist der mindestens eine Filter als Filterscheibe ausgebildet, welche auf einer Hohlwelle angeordnet ist, die drehbar in dem Gehäuse aufgenommen ist. Der Hohlwelleninnenraum der Hohlwelle ist mit dem Auslass verbunden oder bildet diesen. Die auf der Hohlwelle angeordneten Filterscheiben weisen ebenfalls einen Hohlraum auf, der von Filtermaterial umgeben ist, wobei der Hohlraum mit dem Hohlwelleninnenraum verbunden ist, sodass das zu filternde Medium, das über den Einlass in das Gehäuse eingeleitet worden ist durch das Filtermaterial in den Hohlraum der Filterscheibe und von dort in den Hohlwelleninnenraum der Hohlwelle gelangen kann, um diesen über den Auslass wieder zu verlassen.

Durch die drehbare Anordnung der Hohlwelle in dem Gehäuse und der drehfesten Anordnung der Filterscheiben auf der drehbaren Hohlwelle ist es möglich, die Filterscheiben zur Reinigung zu drehen, sodass durch Relativbewegung der Filterscheiben zu ortsfest angeordneten oder relativ beweglichen Reinigungseinrichtungen, wie Bürsten, Absaugvorrichtungen oder dergleichen und/oder die Zentrifugalkraft gefilterte Stoffe, die sich als Filterkuchen auf der Filterscheibe befinden, von der Filterscheibe gelöst und entsorgt werden können. Da hierzu der Filterprozess nicht unterbrochen werden muss kann während des Betriebs, also während der Filtration, jederzeit eine Reinigung der Filterscheiben vorgenommen werden. Insbesondere kann je nach Wunsch in festen Zeitintervallen gereinigt werden oder nach Bedarf, wenn die Filterscheiben mit gefilterten Stoffen zugesetzt sind.

Bei der Filtervorrichtung können mehrere Filterscheiben entlang der Achse der Hohlwelle hintereinander angeordnet sein, sodass je nach erforderlicher Filterfläche die Anzahl der Filterscheiben angepasst werden kann.

Die Filterscheiben können so aufgebaut sein, dass sie einen Träger aufweisen, der den Hohlraum der Filterscheibe umgibt und der das eigentliche Filtermaterial trägt.

Der Träger kann eine gitter- oder fachwerkartige Struktur aufweisen oder ein Gewebe umfassen oder aus einem festen Gewebe gebildet sein.

Das Filtermaterial der Filterscheiben kann aus jedem geeigneten Filtermaterial gebildet sein, insbesondere aus Gewebe, Vlies, Filz, porösen Festkörpern oder Papier oder Kombinationen daraus.

Die Filterscheibe kann eine Nabe zur Anordnung auf der Hohlwelle aufweisen, wobei in der Nabe ein oder mehrere Öffnungen angeordnet sein können, die mit entsprechenden Öffnungen an der Mandelfläche der Hohlwelle korrespondieren, die in einem Bereich der Hohlwelle angeordnet sind, in dem die Filterscheibe angeordnet wird.

Die Filtervorrichtung kann eine Reinigungsvorrichtung aufweisen, die die Filterscheiben reinigen kann, wie Abstreifer, Bürsten oder dergleichen, welche so bezüglich der Filterscheiben angeordnet sein können, dass bei einer Drehbewegung der Filterscheiben eine Reinigung derselben erfolgt. Außerdem kann die Reinigungsvorrichtung durch eine Absaugeinrichtung gebildet sein oder diese umfassen.

Die Filtervorrichtung kann weiterhin entsprechende Stoffabgabeöffnungen aufweisen, über die die ausgefilterten Stoffe bei der Reinigung aus der Filtervorrichtung entfernt werden können. Die Stoffabgabeöffnungen im Gehäuse können unterschiedlich ausgebildet sein.

Beispielswiese kann eine erste Art der Stoffabgabeöffnung durch eine Schwerkraftabgabeöffnung gebildet sein, die an einem unteren Ende der Filtervorrichtung angeordnet ist, um herausgefilterte Stoffe insbesondere bei der Reinigung der Filtervorrichtung durch die Schwerkraft aus der Filtervorrichtung zu entfernen, beispielsweise in einen entsprechenden Sammelbehälter.

Eine weitere Art von Stoffabgabeöffnungen kann durch eine oder mehrere Absaugöffnung gebildet sein, über die mittels einer Absaugvorrichtung herausgefilterte Stoffe vorzugsweise bei der Reinigung abgesaugt werden können.

Die Filtervorrichtung kann weiterhin eine Steuerungs- und/oder Regelungseinrichtung umfassen, mit deren Hilfe die Reinigung der Filtervorrichtung automatisiert durchgeführt werden kann. Hierzu kann die Steuerungs- und/oder Regelungseinrichtung einen Drucksensor aufweisen, sodass bei der Erfassung eines Druckwerts, der einen Grenzwert überschreitet, eine Antriebsvorrichtung zum Antrieb der Hohlwelle angetrieben wird, um so die Filterschreiben zur Reinigung der Filtervorrichtung in eine Drehung zu versetzen. Durch die Drehung werden die an den Filterscheiben anhaftenden, herausgefilterten Stoffe durch die Zentrifugalkraft von der Filterscheibe entfernt und können über die Stoffabgabeöffnungen, also die Schwerkraftabgabeöffnung und die Absaugöffnungen aus dem Gehäuse der Filtervorrichtung entfernt werden. Das Überschreiten eines bestimmten Druckgrenzwertes zeigt hierbei an, dass die Filterscheiben mit herausgefiltertem Stoff belegt sind, da der Durchtritt für das zu filternde Medium erschwert ist und somit der Druck ansteigt.

Darüber hinaus ist auch eine zeitgesteuerte Reinigung, also eine Reinigung in bestimmten Zeitintervallen möglich.

Das über die Absaugvorrichtung abgesaugte Medium kann in einem Kreislauf zurückgeführt werden, sodass es wiederum durch den Einlass der Filtervorrichtung zugeführt werden kann.

### KURZBESCHREIBUNG DER FIGUREN

Die beigefügten Zeichnungen zeigen in rein schematischer Weise in
- Figur 1: eine Perspektivdarstellung einer erfindungsgemäßen Filtervorrichtung,
- Figur 2: eine Seitenansicht der Filtervorrichtung aus Figur 1,
- Figur 3: eine Schnitteinsicht durch die Filtervorrichtung aus Figur 2 entsprechend der Schnittlinie A - A,
- Figur 4: eine weitere Seitenansicht der Filtervorrichtung aus Figur 1,
- Figur 5: eine Schnittansicht durch die Filtervorrichtung aus Figur 4 gemäß der Schnittlinie B-B und in
- Figur 6: eine Schnittansicht durch eine Filterscheibe, die auf der Hohlwelle der Filtervorrichtung aus Figur 1 angeordnet ist.

### AUSFÜHRUNGSBEISPIEL

Die vorliegende Erfindung wird durch die nachfolgende Beschreibung eines Ausführungsbeispiels anhand der beigefügten Zeichnungen detailliert beschrieben. Allerdings ist für den Fachmann ersichtlich, dass die Erfindung nicht auf dieses Ausführungsbeispiel beschränkt ist.

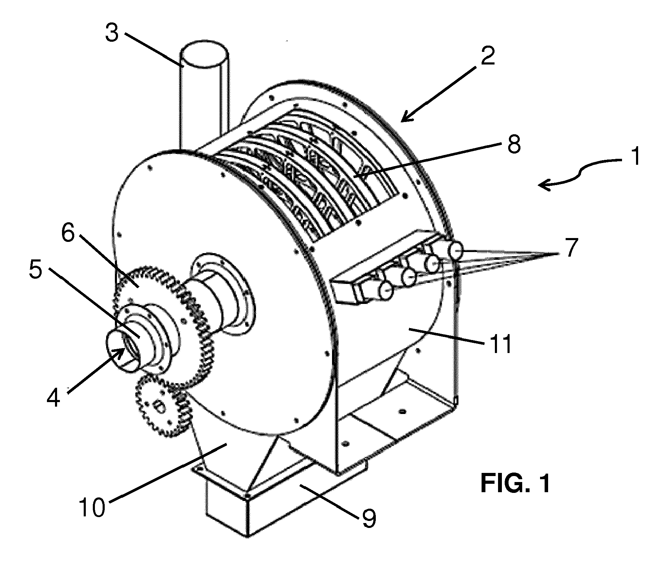

Die Figur 1 zeigt in einer perspektivischen Darstellung ein Ausführungsbeispiel einer erfindungsgemäßen Filtervorrichtung 1 mit einem Gehäuse 2, welches einen zylindrischen Grundkörper 11 aufweist und lediglich an den Stirnseiten verlängerte Befestigungsflansche aufweist, an denen Stand - oder Befestigungsflächen angeordnet sind. An der Mantelfläche 11 des zylindrischen Grundkörpers des Gehäuses 2 ist ein Einlass 3 vorgesehen, durch welchen das zu reinigende Medium, im vorliegenden Ausführungsbeispiel Rauchgas oder mit Staub verunreinigtes Gas, in das Gehäuse 2 eingeleitet werden kann.

In dem Gehäuse 2 befinden sich, wie durch einen Ausschnitt in der Mantelfläche 11 des zylindrischen Grundkörpers zu sehen ist, mehrere Filterscheiben 8, die auf einer Hohlwelle 5 gelagert sind, welche drehbar in dem Gehäuse 2 aufgenommen ist und an der Stirnseite aus dem Gehäuse 2 hervorsteht. Durch die drehfeste Anordnung der Filterscheiben 8 auf der Hohlwelle 5 sind die Filterscheiben 8 ebenfalls drehbar in dem Gehäuse 2 aufgenommen. Die Filterscheiben 8 weisen eine Kreisscheibenform auf, die in ihren Dimensionen an den zylindrischen Grundkörper des Gehäuses 2 angepasst ist, sodass sich die Filterscheiben 8 in dem Gehäuse 2 mit der Hohlwelle 5 drehen können.

Zum Antrieb der Hohlwelle 5 ist eine Antriebsvorrichtung vorgesehen, von der in dem gezeigten Ausführungsbeispiel der Figur 1 die entsprechenden Zahnräder 6 gezeigt sind. Die Antriebsvorrichtung kann weiterhin einen Elektromotor (nicht gezeigt) und weitere Getriebekomponenten (nicht gezeigt) enthalten, um einen geeigneten Antrieb für die Hohlwelle 5 bereit zu stellen.

Die Hohlwelle 5 weist nicht nur die Funktion auf, dass über die Zahnräder 6 und die damit verbundene Antriebsvorrichtung eine Drehung der Filterscheiben 8 bewirkt werden kann, sondern der Hohlwelleninnenraum leitet das gefilterte Gas zum Auslass 4, der durch ein Ende der Hohlwelle 5 gebildet ist.

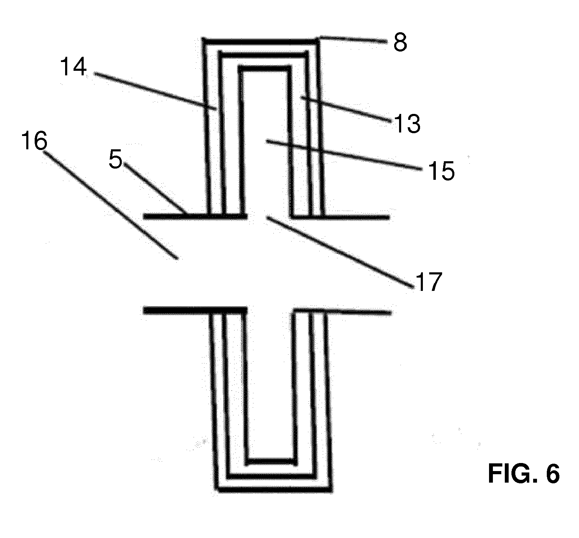

Das zu reinigende Medium, im Ausführungsbeispiel Rauchgas oder mit Staub belastetes Gas, wird somit durch den Einlass 3 in die Filtervorrichtung 1 bzw. das Gehäuse 2 eingeführt und gelangt über die Filterscheiben 8 in den Hohlwelleninnenraum der Hohlwelle 5 und über diesen zum Auslass 4. Die Figur 6 zeigt die weitere Ausgestaltung der Filterscheiben 8 und deren Anordnung auf der Hohlwelle 5, was nachfolgend noch im Detail erläutert wird.

An der Mantelfläche des zylindrischen Grundkörpers des Gehäuses 2 sind außerdem Stoffabgabeöffnungen 7, 10 vorgesehen, über die aus dem Gas bzw. Medium ausgefilterte Stoffe aus dem Gehäuse 2 wieder entfernt werden können.

Die Stoffabgabeöffnungen sind zum einen als Absaugöffnungen 7 und zum anderen als Schwerkraftabgabeöffnung 10 ausgebildet.

Die Schwerkraftabgabeöffnung 10 befindet sich an der Unterseite des zylindrischen Grundkörpers des Gehäuses 2 und dient dazu, gefilterte Stoffe, die von den Filterscheiben 8 zurückgehalten worden sind, bei der Reinigung der Filterscheiben 8 in den Auffangbehälter 9 abzuführen, sodass die ausgefilterten Stoffe leicht aus dem Gehäuse entfernt werden können.

Die Absaugöffnungen 7 befinden sich bei dem gezeigten Ausführungsbeispiel im oberen Bereich der Mantelfläche 11 des zylindrischen Grundkörpers des Gehäuses 2, also in einem Bereich oberhalb der Mittelachse, die durch das Zentrum der Hohlwelle 5 verläuft. Die Absaugöffnungen dienen bei der Reinigung zum Absaugen von ausgefilterten Stoffen. In diesem Bereich können auch weitere Elemente einer Reinigungsvorrichtung vorgesehen sein, wie beispielsweise Bürsten oder Abstreifer (nicht gezeigt), um das Absaugen zu erleichtern.

Die Reinigung der Filterscheiben erfolgt in der Weise, dass die Hohlwelle 5 über die Zahnräder 6 durch die Antriebsvorrichtung gedreht wird, sodass sich auch die Filterscheiben 8 drehen. Durch die Zentrifugalkraft, die durch die Drehung der Filterscheiben 8 entsteht, werden die ausgefilterten Stoffe, die sich als Filterkuchen auf die Filterscheiben 8 abgesetzt haben, gegen die Gehäuseinnenwand geschleudert, wo sie entweder über die Absaugöffnungen abgesaugt oder durch die Schwerkraft über die Schwerkraftabgabeöffnung 10 in den Sammelbehälter 9 überführt werden. Zusätzlich oder alternativ kann durch die Bewegung ein Abstreifen des Filterkuchens an Elementen einer Reinigungsvorrichtung erfolgen.

Die Reinigung der Filterscheiben 8 kann in regelmäßigem, zeitlichem Abstand oder nach Bedarf erfolgen, wobei der Betrieb der Filtervorrichtung 1 bzgl. des Filterns nicht unterbrochen werden muss. Eine bedarfsabhängige Reinigung kann dann erfolgen, wenn beispielsweise über einen Drucksensor (nicht gezeigt) der mit einer Steuerungs- und/oder Regelungseinrichtung (nicht gezeigt) zusammen wirkt, festgestellt wird, dass der Druck im Gehäuse 2 über einen Grenzwert ansteigt, da die Filterscheiben 8 zu stark mit dem Filterkuchen besetzt sind. Bei Überschreiten des Grenzwerts kann automatisch eine entsprechende Reinigung durch Drehen der Filterscheiben 8 bewirkt werden. Entsprechend kann die bedarfsgerechte Reinigung der Filtervorrichtung 1 automatisiert durchgeführt werden.

Sobald die Reinigung mit Drehung der Filterscheiben begonnen wird, kann weiterhin eine Absaugeinrichtung, die mit den Absaugöffnungen 7 verbunden ist, eingeschaltet werden, um zusätzlich eine Absaugung zu bewirken.

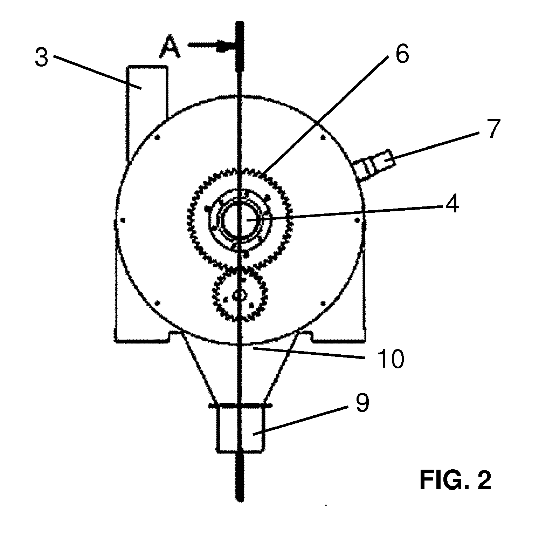

Die Figuren 2 bis 5 zeigen verschiedene Ansichten bzw. Schnittansichten der Filtervorrichtung 1 aus Figur 1.

In Figur 2 ist eine Seitenansicht der Filtervorrichtung 1 von der Seite gezeigt, an der die Antriebsvorrichtung mit den Zahnrädern 6 angeordnet ist und das Ende der Hohlwelle 5 den Auslass 4 bildet.

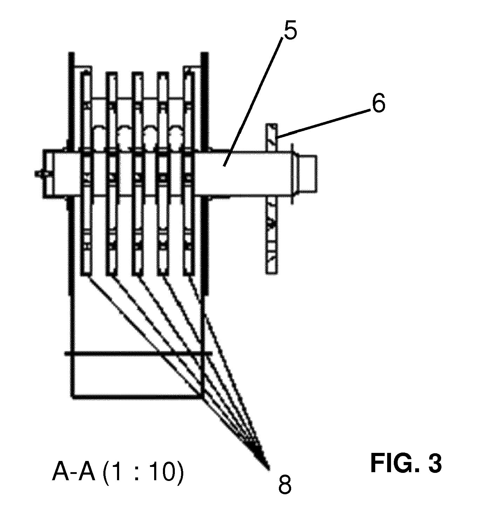

Die Figur 3 zeigt in einer Schnittansicht entlang der Schnittlinie A-A aus Figur 2 eine Schnittansicht, in der die Anordnung der Filterscheiben 8 in dem Gehäuse 2 an der Hohlwelle 5 zu sehen ist.

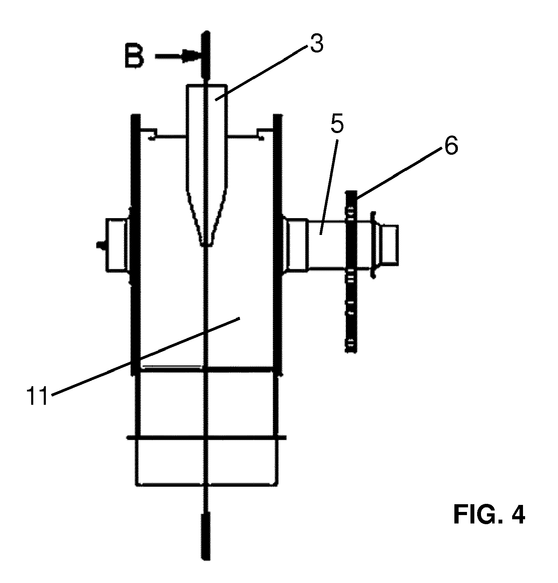

Die Figur 4 zeigt eine Seitenansicht von der Mantelfläche 11 des zylindrischen Grundkörpers des Gehäuses 2 von der Seite, an der der Einlass 3 angeordnet ist.

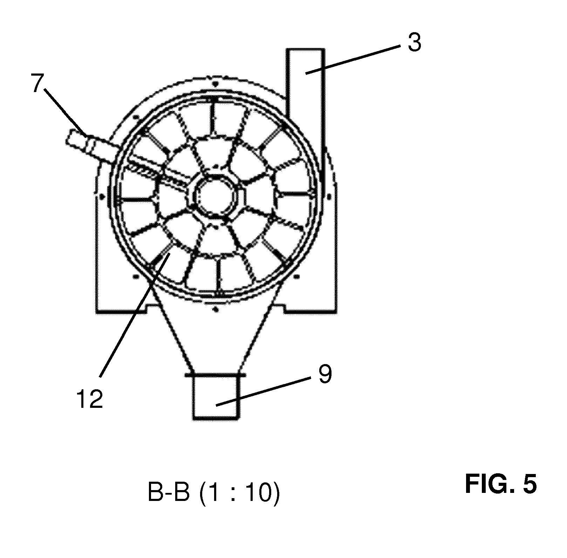

Die Figur 5 zeigt eine Schnittansicht entlang der Schnittebene B-B aus Fig. 4 durch eine Filterscheibe 8. Dadurch ist die Gerüststruktur 12 des Trägers 13 der Filterscheibe 8 zu sehen ist, auf welcher das Filtermaterial angeordnet wird.

Der Aufbau einer Filterscheibe 8 ist in der Figur 6 nähe dargestellt. In der Schnittansicht der Figur 6 ist zum einen die Hohlwelle 5 mit dem Hohlwelleninnenraum 16 zu erkennen und zum anderen der Träger 13 der Filterscheibe 8, der einen Hohlraum 15 der Filterscheibe 8 umschließt, welcher über eine Öffnung 17 mit dem Hohlwelleninnenraum 16 der Hohlwelle 5 in Verbindung steht, sodass verunreinigtes Medium durch die Filterscheibe 8 und speziell über den Hohlraum 15 in den Hohlwelleninnenraum 16 gelangen kann.

Auf dem Träger 13, welcher durch eine gitter - oder fachwerkartige Struktur oder ein grobes, stabiles Gewebe gebildet sein kann, ist ein Filtermaterial 14 aufgebracht, welches den Hohlraum 15 umgibt. Entsprechend kann das zu filternde Medium durch das Filtermaterial 14 und den Träger 13 in den Hohlraum 15 der Filterscheibe 8 gelangen, um durch die Öffnung 17 in den Hohlwelleninnenraum 16 der Hohlwelle 5 zu kommen, um von dort über den Auslass 4 als gereinigtes Gas abgegeben zu werden.

Durch die erfindungsgemäße Filtervorrichtung ist somit eine effektive und effiziente Filtrierung von mit Stoffen belasteten Medien, wie beispielsweise Rauchgas oder staubhaltiges Gas, in einfacher Weise möglich, wobei eine Reinigung der Filter jederzeit in einfacher Weise möglich ist, ohne den Filtrierbetrieb unterbrechen zu müssen. Insbesondere kann die Reinigung vollautomatisiert in fest vorgegebenen Zeitintervallen oder nach Bedarf bei Feststellung einer bestimmten Verunreinigung der Filter durchgeführt werden.

Obwohl die vorliegende Erfindung anhand des Ausführungsbeispiels detailliert beschrieben worden ist, ist für einen Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die vorliegende Offenbarung schließt sämtliche Kombinationen der vorgestellten Einzelmerkmale mit ein.

## Patentansprüche

1. Filtervorrichtung, insbesondere Rauchgas - oder Staubfiltervorrichtung, mit einem Gehäuse (2), einem Einlass (3) für das zu filternde Medium, einem Auslass (4) für das gereinigte Medium und mindestens einem Filter (8), der in dem Gehäuse zur Abtrennung der aus dem Medium zu filternder Stoffe angeordnet ist,
**dadurch gekennzeichnet, dass**
die Filtervorrichtung weiterhin eine Hohlwelle (5) mit einem Hohlwelleninnenraum (16) aufweist, wobei die Hohlwelle drehbar in dem Gehäuse aufgenommen ist und mit dem Auslass verbunden ist oder diesen bildet, und dass der Filter als Filterscheibe (8) ausgebildet ist, wobei die Filterscheibe Filtermaterial (14) und einen Hohlraum (15) aufweist, der zumindest teilweise von dem Filtermaterial umgeben und mit dem Hohlwelleninnenraum verbunden ist, sodass das zu reinigende Medium über den Einlass in das Gehäuse, durch das Filtermaterial in den Hohlraum des Filters und vom Hohlraum des Filters zum Hohlwelleninnenraum und von da zum Auslass gelangen kann.

2. Filtervorrichtung nach Anspruch 1,
**dadurch gekennzeichnet, dass**
mehrere Filterscheiben (8) entlang der Achse der Hohlwelle (5) hintereinander, vorzugsweise drehfest auf der Hohlwelle angeordnet sind.

3. Filtervorrichtung nach Anspruch 1 oder 2,
**dadurch gekennzeichnet, dass**
die Filterscheibe (8) einen Träger (13) und das auf dem Träger aufgebrachte Filtermaterial (14) umfasst, wobei vorzugsweise der Träger den Hohlraum (15) definiert und/oder aus einer gitter - oder fachwerkartigen Struktur (12) oder einem Gewebe gebildet ist.

4. Filtervorrichtung nach einem der vorhergehenden Ansprüche,
**dadurch gekennzeichnet, dass**
das Filtermaterial (14) mindestens einen Bestandteil der Gruppe umfasst, die ein Gewebe, ein Vlies, einen Filz, einen porösen Festkörper oder Papier umfasst.

5. Filtervorrichtung nach einem der vorhergehenden Ansprüche,
**dadurch gekennzeichnet, dass**
die Filterscheibe (8) eine Nabe zur Anordnung auf der Hohlwelle (5) aufweist, wobei in der Nabe ein oder mehrere Öffnungen angeordnet sind, die mit entsprechenden Öffnungen an der Mantelfläche der Hohlwelle korrespondieren.

6. Filtervorrichtung nach einem der vorhergehenden Ansprüche,
**dadurch gekennzeichnet, dass**
die Filtervorrichtung im Gehäuse (2) weiterhin mindestens eine Stoffabgabeöffnung (7,10) aufweist, wobei vorzugsweise mindestens zwei unterschiedliche Arten von Stoffabgabeöffnungen vorhanden sind, nämlich mindestens eine Schwerkraftabgabeöffnung (10) und mindestens eine Absaugöffnung (7), wobei insbesondere in Verbindung mit der Absaugöffnung eine Absaugvorrichtung vorgesehen ist.

7. Filtervorrichtung nach einem der vorhergehenden Ansprüche,
**dadurch gekennzeichnet, dass**
die Filtervorrichtung weiterhin eine Antriebsvorrichtung (6) für die Hohlwelle (5) und/oder eine Steuerungs - und/oder Regelungseinrichtung umfasst, wobei vorzugsweise die Steuerungs - und/oder Regelungseinrichtung einen Drucksensor umfasst, wobei bei Überschreiten eines Grenzwertes für den Druck die Antriebsvorrichtung zum Antrieb der Hohlwelle betrieben wird, um die Filterscheiben durch Drehung zu reinigen.

8. Filtervorrichtung nach einem der vorhergehenden Ansprüche,
**dadurch gekennzeichnet, dass**
das das Gehäuse (2) einen zylindrischen Grundkörper mit einer Mantelfläche aufweist, durch dessen Mittelachse sich die Hohlwelle erstreckt und der die Filterscheibe(n) aufnimmt, wobei an der Mantelfläche der Einlass und/oder eine oder mehrere Stoffabgabeöffnungen angeordnet sind.

9. Verfahren zum Betrieb einer Filtervorrichtung, insbesondere Filtervorrichtung nach einem der vorhergehenden Ansprüche, bei welcher mindestens ein Filter (8) vorgesehen ist, der drehbar gelagert ist, wobei der Filter zur Reinigung gedreht wird, während der Filter außerhalb der Reinigungszeiten stationär angeordnet ist.

10. Verfahren nach Anspruch 9,
**dadurch gekennzeichnet, dass**
bei der Filtervorrichtung weiterhin eine Absaugvorrichtung vorgesehen ist, mit der während der Reinigung des Filters eine Absaugung vorgenommen wird.
